# FASCICULE DE BREVET EUROPEEN

(11) **EP 0 995 886 B1**
(45) Date de publication et mention de la délivrance du brevet: **06.05.2004**
(21) Numéro de dépôt: 99402540.1
(22) Date de dépôt: 15.10.1999
(51) Int. Cl.: F01N 3/08, F01N 3/20, F01N 3/22

(54) **Dispositif d'échappement pour gaz d'échappement d'un moteur à combustion interne et son procédé de fonctionnement**
Abgasanlage einer Brennkraftmaschine und Verfahren zu deren Betrieb
Exhaust device of an internal combustion engine and method of operation

(30) Priorité: 20.10.1998 FR 9813147
(43) Date de publication de la demande: 26.04.2000
(73) Titulaire: Renault s.a.s., 92100 Boulogne Billancourt (FR)
(72) Inventeur: Bonetto, Robert, 91290 Arpajon (FR); Cornet, Pierrick, La Montagne, 91150 Morigny Champigny (FR); Semelle, Fabrice, 45300 Pithiviers le Vieil (FR); Thaveau, Christophe, 45300 Sermaises (FR); Van Franck, Jean, 92500 Rueil Malmaison (FR)

(56) Documents cités:
- EP-A- 0 824 182
- US-A- 5 634 331
- PATENT ABSTRACTS OF JAPAN vol. 098, no. 010, 31 août 1998 (1998-08-31) & JP 10 121949 A (FUJI HEAVY IND LTD), 12 mai 1998 (1998-05-12)

## Description

La présente invention concerne un dispositif d'échappement pour gaz d'échappement d'un moteur à combustion interne et son procédé de fonctionnement.

Pour traiter les émissions polluantes contenues dans les gaz d'échappement d'un moteur à combustion interne, on utilise couramment un pot catalytique. Le catalyseur à base de monolithes que contient ce pot catalytique n'est cependant efficace que si sa température est supérieure à une valeur déterminée dite températeure "d'amorçage", en général comprise entre 300°C et 400°C. Il est donc souhaitable d'atteindre cette température d'amorçage le plus rapidement possible après le démarrage du moteur afin de limiter la durée des rejets polluants dans l'atmosphère.

Une solution connue pour celà consiste à prévoir un pot catalytique principal monté au plus près de la sortie du moteur, voire intégré au collecteur d'échappement, un piège à hydrocarbures monté à distance du pot catalytique principal et un pot catalytique secondaire installé après le piège à hydrocarbures et muni de moyens de chauffage électrique à son entrée.

Lors d'un démarrage à froid du moteur, le pot catalytique principal n'est pas apte à traiter les gaz d'échappement du fait que sa température est trop basse et les hydrocarbures contenus dans ces gaz sont stockés dans le piège à hydrocarbures. Cependant, lorsque la température de ce piège atteint environ 200°C, il relargue les hydrocarbures qu'il a stockés préalablement. Ces derniers sont alors traités par le catalyseur secondaire préalablement chauffé par les moyens de chauffage électrique.

Le problème posé par un tel dispositif d'échappement consiste donc à accélérer la montée en température des deux pots catalytiques de telle sorte que le pot catalytique principal soit prêt à traiter les gaz d'échappement une fois que le piège à hydrocarbures est chaud et donc inefficace en stockage et que le second pot catalytique soit prêt à traiter les polluants relargués par le piège à hydrocarbures lorsque ce dernier cesse de produire les effets de stockage.

Pour accélérer la mise en action du pot catalytique principal, on peut avoir recours à un appauvrissement en carburants de l'alimentation du moteur, ce qui réduit ses capacités et engendre des désagréments de conduite. De plus, le positionnement du premier pot catalytique au plus prés de la sortie d'échappement du moteur oblige à enrichir en carburants l'alimentation du moteur lorsque ce dernier est en pleine charge afin de refroidir ledit pot, pénalisant ainsi la consommation et augmentant les émissions polluantes dans les gaz d'échappement. Ce positionnement réduit aussi la durée de vie du dispositif d'échappement.

«D'autre part, le document EP 824 182 enseigne un dispositif d'injection d'air supplémentaire entre un pot de piégeage des hydrocarbure et un pot catalytique situé en aval et comprenant en entrée une résistance électrique chauffante. »

La présente invention a pour but de proposer un dispositif d'échappement et son procédé de fonctionnement qui permettent d'améliorer l'efficacité du traitement des gaz d'échappement d'un moteur à combustion interne.

Selon un objet de la présente invention, le dispositif d'échappement pour gaz d'échappement d'un moteur à combustion interne comprend, d'amont en aval, un pot de piégeage-relargage des hydrocarbures contenus dans les gaz d'échappement, un pot catalytique renfermant un catalyseur de traitement d'au moins certaines des émissions polluantes contenues dans les gaz d'échappement, des moyens de chauffage des gaz d'échappement placés entre le pot de piègeage et le pot catalytique, et des moyens pour injecter de l'air dans les gaz d'échappement entre le pot de piègeage et le pot catalytique.

Selon l'invention, ledit pot catalytique comprend de préférence deux parties successives de volumes différents renfermant un catalyseur, sa partie de plus petit volume étant en amont de sa partie de plus grand volume.

Selon l'invention, lesdits moyens de chauffage sont de préférence placés à l'entrée du pot catalytique.

Selon l'invention, le dispositif d'échappement peut avantageusement comprendre un collecteur d'échappement à tubulures en Y reliées à l'entrée dudit piège à hydrocarbures.

Selon l'invention, le dispositif d'échappement comprend de préférence des moyens pour imposer une surrichesse à l'alimentation en carburant du moteur.

Selon un autre objet de la présente invention, le procédé de fonctionnement d'un dispositif d'échappement pour gaz d'échappement d'un moteur à combustion interne, au moment de la mise en fonctionnement de ce dernier, consiste : à faire fonctionner lesdits moyens de chauffage et lesdits moyens d'injection d'air pendant une durée déterminée ; à imposer une surrichesse de l'alimentation du moteur au bout d'un délai prédéterminé suivant la mise en fonctionnement desdits moyens de chauffage et desdits moyens d'injection d'air et pendant une durée déterminée ; la phase de fonctionnement desdits moyens de chauffage et desdits moyens d'injection d'air et la phase de surrichesse présentant des parties concommitentes.

Selon l'invention, la phase de fonctionnement desdits moyens de chauffage débute de préférence peu de temps après le démarrage du moteur.

Selon l'invention, la phase de fonctionnement desdits moyens d'injection d'air débute de préférence en même temps que la phase de surrichesse.

Selon l'invention, la coupure ou une réduction de puissance desdits moyens de chauffage et la coupure ou une réduction de puissance desdits moyens d'injection d'air débutent de préférence sensiblement au même instant.

Selon l'invention, la phase de fonctionnement desdits moyens d'injection d'air se termine de préférence sensiblement à la fin de la phase de surrichesse.

Selon l'invention, la phase de fonctionnement desdits moyens de chauffage présente de préférence une réduction de puissance dans sa partie terminale.

Selon l'invention, ladite coupure ou une réduction de puissance desdits moyens de chauffage et ladite coupure ou une réduction de puissance desdits moyens d'injection d'air se terminent de préférence postérieurement à la mise en marche du moteur.

Selon l'invention, le procédé peut avantageusement consister à mettre en marche un moyen d'avertissement à la mise en fonctionnement desdits moyens de chauffage et desdits moyens d'injection d'air et à mettre à l'arrêt ce moyen au bout d'une durée prédéterminée.

Selon l'invention, la mise à l'arrêt dudit moyen d'avertissement coincide de préférence sensiblement avec le début desdites coupures ou réductions de puissance.

La présente invention sera mieux comprise à l'étude d'un dispositif d'échappement pour gaz d'échappement d'un moteur à combustion interne et son procédé de fonctionnement, décrits à titre d'exemples non limitatifs et illustrés par le dessin sur lequel :
- la figure 1 représente schématiquement un dispositif d'échappement selon la présente invention ;
- et la figure 2 représente un chronogramme illustrant un procédé de fonctionnement du dispositif d'échappement représenté sur la figure 1.

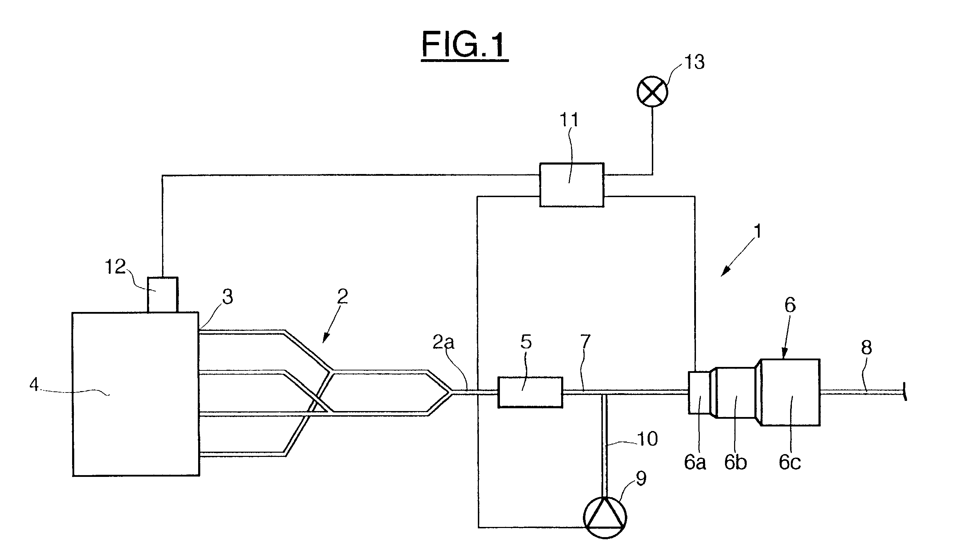

Le dispositif d'échappement 1 représenté sur la figure 1 comprend, d'amont en aval, un collecteur d'échappement 2 dont les entrées sont reliées aux sorties d'échappement 3 d'un moteur à combustion interne 4, un piège à hydrocarbures 5 dont l'entrée est reliée au conduit de sortie 2a du collecteur d'échappement 2, un pot catalytique 6 dont l'entrée est reliée à la sortie du piège à hydrocarbures 5 par un conduit 7 et dont la sortie est reliée à un conduit 8 d'échappement vers l'atmosphère.

Dans l'exemple représenté, le collecteur d'échappement 2 est du type à trois Y longs de façon à relier les quatre sorties d'échappement 3 du moteur 4 au conduit unique 2a relié à l'entrée du piège à hydrocarbures 5.

Le pot catalytique 6 comprend à son entrée un moyen de chauffage électrique 6a des gaz d'échappement, par exemple constitué par une grille chauffante traversée par les gaz d'échappement et deux parties successives 6b et 6c renfermant un catalyseur, par exemple à base de monolithes, et de volumes différents, sa partie 6b de plus petit volume étant en amont de sa partie 6c de plus grand volume.

Le dispositif d'échappement 1 comprend en outre une pompe 9 qui permet d'injecter de l'air atmosphérique dans le conduit 7 par l'intermédiaire d'un conduit 10, entre le piège à hydrocarbures 5 et le pot catalytique 6.

Le dispositif d'échappement 1 comprend également un circuit électronique de commande 11 qui sélectivement permet d'alimenter en énergie électrique le moyen de chauffage 6a et de faire fonctionner la pompe, de piloter un dispositif d'alimentation 12 du moteur 4 en combustible et d'alimenter un moyen d'avertissement du conducteur du véhicule tel qu'un voyant lumineux 13.

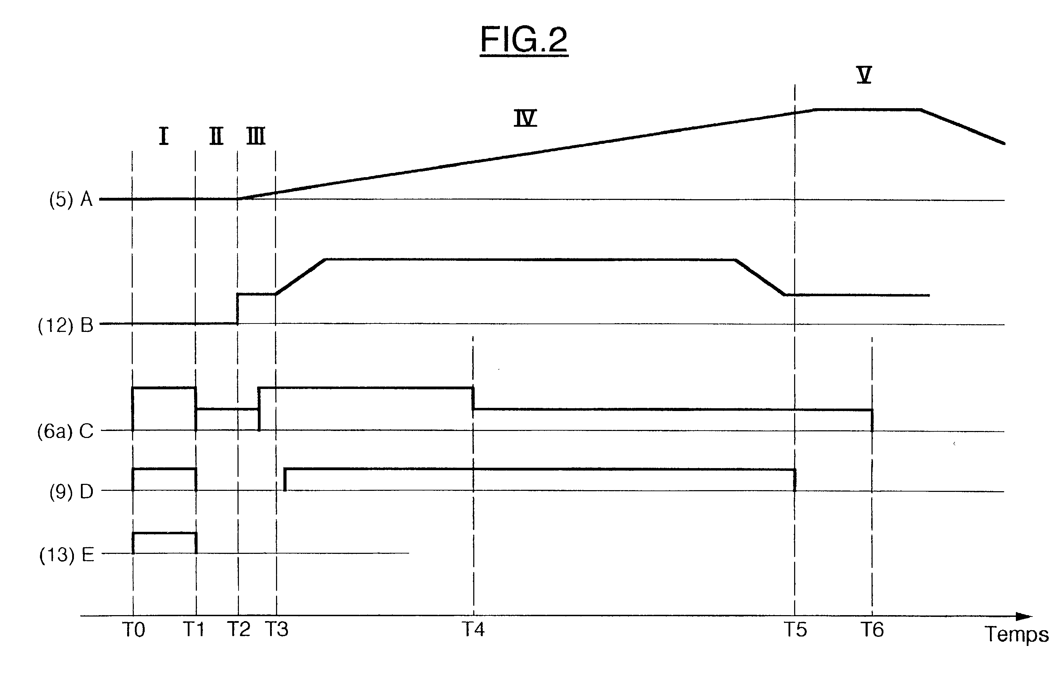

Le circuit électronique de commande 11 est construit à l'aide de moyens connus de façon à faire fonctionner le dispositif d'échappement 1 conformément au chronogramme représenté sur la figure 2, de la manière suivante.

Sur cette figure 2, on a représenté sous la référence A une courbe de fonctionnement du piège à hydrocarbures 5, sous la référence B une courbe de fonctionnement du dispositif d'alimentation 12 du moteur 4, sous la référence C une courbe de fonctionnement de la grille chauffante du moyen de chauffage 6a du pot catalytique 6, sous la référence D une courbe de fonctionnement de la pompe à air 9 et sous la référence E une courbe de fonctionnement du voyant lumineux 13.

A l'instant T0, le conducteur du véhicule met le contact de manière à provoquer une alimentation générale en énergie électrique des moyens électriques non représentés associés au moteur 4, et en particulier du circuit électronique de commande 11.

A cet instant T0, le circuit électronique de commande 11 met en fonctionnement sous une forte puissance le moyen de chauffage 6a en alimentant sa grille chauffante en énergie électrique, met en fonctionnement la pompe à air 9 et met en fonctionnement le voyant lumineux 13.

A un instant T1 distant du temps T0 par exemple d'environ cinq secondes, le circuit électronique de commande 11 provoque une réduction de la puissance de chauffe de la grille chauffante du moyen de chauffage 6a du pot catalytique 6, provoque l'arrêt de la pompe à air 9 et l'extinction du voyant lumineux 13.

Le voyant lumineux 13 étant éteint, le conducteur du véhicule provoque le démarrage du moteur4 à un instant T2 distant de l'instant T1 en général d'une valeur comprise entre une et quatre secondes, le circuit électronique de commande mettant en même temps en fonctionnement le dispositif d'alimentation 12.

Aux environs d'un temps T3, par exemple distant du temps T2 d'une à trois secondes, le circuit électronique de commande 11 remet en fonctionnement à pleine puissance le moyen de chauffage 6a, remet en marche la pompe à air 9 et agit sur le dispositif d'alimentation 12 de façon à provoquer une surrichesse du combustible injecté dans le moteur 4, et ce de façon progressive.

A un instant T4 distant de l'instant T3 par exemple d'environ vingt secondes, le circuit électronique de commande 11 provoque une réduction à faible puissance de l'alimentation en énergie électrique du moyen de chauffage 6a du pot catalytique 6.

A un instant T5 distant du temps T3 par exemple d'environ une cinquantaine de secondes, le circuit électronique de commande 11 provoque l'arrêt de la pompe à air 9 en ayant stopper progressivement la commande en surrichesse du dispositif d'alimentation 12 juste avant.

A un instant T6 distant de l'instant T5 par exemple d'une dizaine de secondes, le circuit électronique de commande 11 provoque l'arrêt de l'alimentation en énergie électrique de la grille chauffante du moyen de chauffage 6a du pot catalytique 6.

Il résulte du chronogramme ci-dessus que le dispositif d'échappement 1 agit de la manière suivante.

Dans la phase I séparant les instants T0 et T1, le pot catalytique 6 est préchauffé grâce à l'air atmosphérique injecté par la pompe à air 9 et chauffé par la grille chauffante d'entrée de son moyen de chauffage 6a. Ce préchauffage est destiné à atteindre au plus vite la température nécessaire à laquelle le pot catalytique 6 déclenche sa réaction d'oxydation des oxydes de carbone qui est d'environ de 200°C. La durée de la phase I peut être calibrable en fonction de la température d'eau du moteur 4.

Dans la phase II séparant les instants T1 et T2, il est simplement maintenu une alimentation à faible puissance de la grille chauffante du moyen de chauffage 6a du pot catalytique 6 de façon à entretenir la température du pot catalytique 6 jusqu'au démarrage du moteur à l'instant T2. La durée maximum de cette phase 2 peut être fonction de la tenue mécanique de la grille chauffante.

La phase III séparant les instants T2 et T3 correspond à la mise en marche proprement dite du moteur 4.

A partir de l'instant T2, le piège à hydrocarbures 5 stocke les hydrocarbures contenus dans les gaz d'échappement.

Dans la phase IV séparant les instants T3 et T5, la surrichesse appliquée par le dispositif d'alimentation 12 au moteur 4 et l'injection d'air assurée par la pompe à air 9, permettant d'assurer une forte oxydation des oxydes de carbone des gaz d'échappement et donc de créer une exothermicité importante dans le pot catalytique 6. Cette surrichesse est appliquée progressivement afin de suivre au plus près le développement de la réaction exothermique dans le pot catalytique 6.

L'application de cette surrichesse qui engendre la présence d'hydrocarbures et d'oxydes de carbone dans les gaz d'échappement ne représente pas une difficulté car les hydrocarbures sont stockés par le piège à hydrocarbures 5 et tout l'oxyde de carbone émis se trouve oxydé. De plus, les oxydes d'azote sont émis en très faibles quantités du fait de la surrichesse.

L'instant T4 de mise à faible puissance du moyen de chauffage 6 à l'intérieur de la phase IV peut être fonction d'un compromis entre l'efficacité du pot catalytique 6 et la surconsommation en carburants.

A la fin de la phase IV, le pot catalytique 6 est pleinement efficace et sa température est supérieure à sa température d'amorçage située environ entre 500°C et 600°C.

Après l'instant T5, la pompe à air 9 et le fonctionnement en surrichesse du dispositif d'alimentation 12 sont définitivement stoppés. Seul est maintenu jusqu'à l'instant T6 le fonctionnement en faible puissance du moyen de chauffage 6.

Pendant la phase V, le piège à hydrocarbures cesse de produire ses effets de stockage des hydrocarbures contenus dans les gaz d'échappement et, sa température continuant d'augmenter, il commence à relarguer les hydrocarbures qui peuvent être traités par le pot catalytique 6 en même temps que les émissions contenues dans les gaz d'échappement provenant du moteur 4.

Après la phase V, le dispositif d'échappement 1 fonctionne normalement, seules les parties 6b et 6c du pot catalytique 6 étant actives pour traiter les émissions polluantes contenues dans les gaz d'échappement du moteur 4 à son entrée.

Le dispositif d'échappement 1 et son procédé de fonctionnement qui viennent d'être décrits permettent d'atteindre des rejets dans l'atmosphère proches de zéro lors de la mise en marche du moteur, avant que le catalyseur contenu dans le pot catalytique 6 produise efficacement ses effets. Du fait que les constituants du dispositif d'échappement 1 peuvent être éloignés du moteur 4, celà permet d'assurer une durée de vie plus grande de ses composants et de meilleures performances du moteur 4 du fait de l'utilisation d'un collecteur 2 à tubulures en Y de jonction.

Bien entendu, le dimensionnement des composants du dispositif d'échappement 1 et le positionnement relatif des instants T0 à T6 peuvent être obtenus par expériences et modélisations.

## Revendications

1. Dispositif d'échappement pour gaz d'échappement d'un moteur à combustion interne, comprenant d'amont en aval :
- un pot de piégeage-relargage (5) des hydrocarbures contenus dans les gaz d'échappement ;
- un pot catalytique (6) renfermant un catalyseur de traitement d'au moins certaines des émissions polluantes contenues dans les gaz d'échappement ;
- des moyens de chauffage (6a) des gaz d'échappement placés entre le pot de piègeage (5) et le pot catalytique (6) ;
- des moyens (9) pour injecter de l'air dans les gaz d'échappement entre le pot de piègeage et le pot catalytique, et
des moyens (11, 12) pour commander la richesse d'alimentation au moteur, **caractérisé en ce que** les moyens (11, 12) pour commander la richesse d'alimentation au moteur imposent un surichesse de l'alimentation au moteur au bout d'un délai prédéterminé suivant la mise en fonctionnement desdits moyens de chauffage (6a) et desdits moyens (9) d'injection d'air et pendant un durée déterminée.

2. Dispositif d'échappement selon la revendication 1, **caractérisé par le fait que** ledit pot catalytique (6) comprend deux parties successives (6b, 6c) de volumes différents renfermant un catalyseur, sa partie (6b) de plus petit volume étant en amont de sa partie (6c) de plus grand volume.

3. Dispositif d'échappement selon la revendication 1, **caractérisé par le fait que** lesdits moyens de chauffage (6a) sont placés à l'entrée du pot catalytique.

4. Dispositif d'échappement selon la revendication 1, **caractérisé par le fait qu'**il comprend un collecteur d'échappement (2) à tubulures en Y reliées à l'entrée dudit piège à hydrocarbures.

5. Procédé de fonctionnement d'un dispositif d'échappement pour gaz d'échappement d'un moteur à combustion interne, au moment de la mise en fonctionnement de ce dernier, pour la mise en oeuvre du dispositif selon l'une quelconque des revendications précédentes, **caractérisé par le fait qu'**il consiste :
- à faire fonctionner lesdits moyens de chauffage (6a) et lesdits moyens d'injection d'air (9) pendant une durée déterminée ;
- à imposer une surrichesse de l'alimentation du moteur au bout d'un délai prédéterminé suivant la mise en fonctionnement desdits moyens de chauffage et desdits moyens d'injection d'air et pendant une durée déterminée ;
- la phase de fonctionnement desdits moyens de chauffage (6a) et desdits moyens d'injection d'air (9) et la phase de surrichesse présentant des parties concommitentes.

6. Procédé selon la revendication 5, **caractérisé par le fait que** la phase de fonctionnement desdits moyens de chauffage (6a) présente une coupure ou une réduction de puissance se terminant sensiblement au début de la phase de surrichesse.

7. Procédé selon la revendication 5, **caractérisé par le fait que** la phase de fonctionnement desdits moyens d'injection d'air (9) présente une coupure ou une réduction de puissance se terminant sensiblement au début de la phase de surrichesse.

8. Procédé selon les revendications 6 et 7, **caractérisé par le fait que** la coupure ou une réduction de puissance desdits moyens de chauffage (6a) et la coupure ou une réduction de puissance desdits moyens d'injection d'air (9) débutent sensiblement au même instant.

9. Procédé selon l'une quelconque des revendications 5 à 8, **caractérisé par le fait que** la phase de fonctionnement desdits moyens d'injection d'air (9) se termine sensiblement à la fin de la phase de surrichesse.

10. Procédé selon l'une quelconque des revendications 5 à 9, **caractérisé par le fait que** la phase de fonctionnement desdits moyens de chauffage (6a) présente une réduction de puissance dans sa partie terminale.

11. Procédé selon l'une des revendications 5 et 10, **caractérisé par le fait que** ladite coupure ou une réduction de puissance desdits moyens de chauffage (6a) et ladite coupure ou une réduction de puissance desdits moyens d'injection d'air (9) se terminent postérieurement à la mise en marche du moteur.

12. Procédé selon l'une quelconque des revendications 5 à 11, **caractérisé par le fait qu'**il consiste à mettre en marche un moyen d'avertissement (13) à la mise en fonctionnement desdits moyens de chauffage (6a) et desdits moyens d'injection d'air (9) et à mettre à l'arrêt ce moyen au bout d'une durée prédéterminée.

13. Procédé selon la revendication 12, **caractérisé par le fait que** la mise à l'arrêt dudit moyen d'avertissement (13) coïncide sensiblement avec le début de ladite coupure ou réduction de puissance.

## Claims

1. An exhaust system for exhaust gases from an internal combustion engine comprising in a downstream direction:
- a trap-removal box (5) for the hydrocarbons contained in the exhaust gases;
- a catalytic converter (6) containing a catalyst for treating at least some of the polluting emissions contained in the exhaust gases;
- heating means (6a) for heating the exhaust gases, the heating means being disposed between the trap box (5) and the catalytic converter (6);
- means (9) for injecting air into the exhaust gases between the trap box and the catalytic converter, and
- means (11, 12) for controlling the richness of the feed to the engine,
**characterised in that** the means (11, 12) for controlling the richness of the feed to the engine impose an increase in richness of the feed to the engine at the end of a predetermined delay time following the start-up of said heating means (6a) and said air injection means (9) and for a given period of time.

2. An exhaust system according to claim 1 **characterised in that** said catalytic converter (6) comprises two successive portions (6b, 6c) of different volumes containing a catalyst, its smaller-volume portion (6b) being upstream of its larger-volume portion (6c).

3. An exhaust system according to claim 1 **characterised in that** said heating means (6a) are disposed at the intake of the catalytic converter.

4. An exhaust system according to claim 1 **characterised in that** it comprises an exhaust manifold (2) with pipes in a Y-configuration which are connected to the intake of said hydrocarbon trap.

5. A method of operating an exhaust system for exhaust gases from an internal combustion engine at the moment when the engine is started up for use of the system according to any one of the preceding claims **characterised in that** it comprises:
- operating said heating means (6a) and said air injection means (9) for a given period of time;
- imposing an increase in richness of the feed to the engine at the end of a predetermined delay time following the start-up of said heating means and said air injection means and for a given period of time, and
- the phase of operation of said heating means (6a) and said air injection means (9) and the increased-richness phase having concomitant parts.

6. A method according to claim 5 **characterised in that** the phase of operation of said heating means (6a) has a cut-off or a reduction in power terminating substantially at the beginning of the increased-richness phase.

7. A method according to claim 5 **characterised in that** the phase of operation of said air injection means (9a) has a cut-off or a reduction in power terminating substantially at the beginning of the increased-richness phase.

8. A method according to claims 6 and 7 **characterised in that** the cut-off or a reduction in power of said heating means (6a) and the cut-off or a reduction in power of said air injection means (9) begin substantially at the same instant.

9. A method according to any one of claims 5 to 8 **characterised in that** the phase of operation of said air injection means (9) terminates substantially at the end of the increased-richness phase.

10. A method according to any one of claims 5 to 9 **characterised in that** the phase of operation of said heating means (6a) has a reduction in power in its terminal part.

11. A method according to one of claims 5 and 10 **characterised in that** said cut-off or a reduction in power of said heating means (6a) and said cut-off or a reduction in power of said air injection means (9) terminate subsequently to start-up of the engine.

12. A method according to any one of claims 5 to 11 **characterised in that** it comprises starting operation of a warning means (13) when said heating means (6a) and said air injection means (9) are set in operation and stopping said warning means at the end of a predetermined period of time.

13. A method according to claim 12 **characterised in that** stoppage of said warning means (13) coincides substantially with the beginning of said cut-off or reduction in power.

## Patentansprüche

1. Auslassvorrichtung für Abgas eines Verbrennungsmotors, aufweisend von oben kommend stromabwärts:
- einen Topf zum Auffangen-Aussalzen (5) von Kohlenwasserstoffen, welche in dem Abgas enthalten sind;
- einen katalytischen Topf (6), umfassend einen Katalysator zum Behandeln von wenigstens mancher der Schadstoffemissionen, welche in dem Abgas enthalten sind;
- Mittel zum Erhitzen (6a) der Abgase, welche zwischen dem Topf zum Auffangen (5) und dem katalytischen Topf (6) angeordnet sind;
- Mittel (9) zum Injizieren von Luft in die Abgase zwischen dem Topf zum Auffangen und dem katalytischen Topf, und
Mittel (11, 12) zum Steuern des Gemischs der Kraftstoffzufuhr zum Motor,
**dadurch gekennzeichnet, dass**
die Mittel (11, 12) zum Steuern des Gemischs der Kraftstoffzufuhr zum Motor ein Überangebot der Kraftstoffzufuhr zum Motor am Ende einer vorherbestimmten Verzögerung nachfolgend der Inbetriebnahme der Erhitzungsmittel (6a) und der Mittel (9) zum Injizieren von Luft und während einer bestimmten Dauer auferlegen.

2. Auslassvorrichtung gemäß Anspruch 1, **dadurch gekennzeichnet, dass** der katalytische Topf (6) zwei aufeinander folgende Teile (6b, 6c) von unterschiedlichen Volumina aufweist, welche einen Katalysator umfassen, wobei sein Teil (6b) von kleinerem Volumen stromaufwärts von seinem Teil (6c) von größerem Volumen ist.

3. Auslassvorrichtung gemäß Anspruch 1, **dadurch gekennzeichnet, dass** die Erhitzungsmittel (6a) am Eingang des katalytischen Topfs angeordnet sind.

4. Auslassvorrichtung gemäß Anspruch 1, **dadurch gekennzeichnet, dass** sie einen Auspuffkrümmer (2) mit Rohren in Y-Form aufweist, welche an dem Eingang der Kohlenwasserstofffalle verbunden sind.

5. Verfahren des Betriebs einer Auslassvorrichtung für Abgas eines Verbrennungsmotors im Moment der Inbetriebnahme der letzteren, zum Betreiben der Vorrichtung gemäß einem der vorhergehenden Ansprüche, **dadurch gekennzeichnet, dass** es besteht aus:
- Inbetriebsetzen der Erhitzungsmittel (6a) und der Luftinjizierungsmittel (9) während einer bestimmten Dauer;
- Auferlegen eines Überangebots der Kraftstoffzufuhr zum Motor am Ende einer vorherbestimmten Verzögerung nachfolgend der Inbetriebnahme der Erhitzungsmittel und der Luftinjizierungsmittel und während einer vorherbestimmten Dauer;
- wobei die Betriebsphase der Erhitzungsmittel (6a) und der Mittel zu Injizierung von Luft (9) und die Phase des Überangebots übereinstimmende Teile aufweisen.

6. Verfahren nach Anspruch 5, **dadurch gekennzeichnet, dass** die Betriebsphase der Erhitzungsmittel (6a) eine Unterbrechung oder eine Reduktion der Leistung aufweist, welche im Wesentlichen zu Beginn der Phase des Überangebots endet.

7. Verfahren gemäß Anspruch 5, **dadurch gekennzeichnet, dass** die Betriebsphase der Luftinjizierungsmittel (9) eine Unterbrechung oder eine Reduktion der Leistung aufweist, welche im Wesentlichen zu Beginn der Phase des Überangebots endet.

8. Verfahren nach den Ansprüchen 6 und 7, **dadurch gekennzeichnet, dass** die Unterbrechung oder eine Reduktion der Leistung der Erhitzungsmittel (6a) und die Unterbrechung oder eine Reduktion der Leistung der Luftinjizierungsmittel (9) im Wesentlichen gleichzeitig beginnen.

9. Verfahren nach einem der Ansprüche 5 bis 8, **dadurch gekennzeichnet, dass** die Betriebsphase der Luftinjektionsmittel (9) im Wesentlichen zum Ende der Phase des Überangebots endet.

10. Verfahren nach einem der Ansprüche 5 bis 9, **dadurch gekennzeichnet, dass** die Betriebsphase der Erhitzungsmittel (6a) eine Reduktion der Leistung in ihrer Endphase aufweist.

11. Verfahren nach einem der Ansprüche 5 und 10, **dadurch gekennzeichnet, dass** die Unterbrechung oder eine Reduktion der Leistung der Erhitzungsmittel (6a) und die Unterbrechung oder eine Reduktion der Leistung der Luftinjektionsmittel (9) nach der Ingangsetzung des Motors enden.

12. Verfahren nach einem der Ansprüche 5 bis 11, **dadurch gekennzeichnet, dass** es aus dem Ingangsetzen einer Warneinrichtung (13) bei der Inbetriebnahme der Erhitzungsmittel (6a) und der Luftinjektionsmittel (9) und Abstellen dieser Einrichtung am Ende einer vorherbestimmten Dauer besteht.

13. Verfahren nach Anspruch 12, **dadurch gekennzeichnet, dass** das Abstellen der Warneinrichtung (13) zeitlich im Wesentlichen mit dem Beginn der Unterbrechung oder Reduktion der Leistung zusammenfällt.
